# EUROPEAN PATENT APPLICATION

(11) **EP 2 650 814 A1**
(43) Date of publication of application: **16.10.2013**
(21) Application number: 12305212.8
(22) Date of filing: 23.02.2012
(51) Int. Cl.: G06F 21/30, H04L 9/08

(54) **Method for authenticating a user**

(71) Applicant: Gemalto SA, 92190 Meudon (FR)
(72) Inventor: Perticara, François, 13705 La Ciotat (FR); Rouchouze, Bruno, 13705 La Ciotat (FR); Tripotin, Guennolé, 13705 La Ciotat (FR); Faher, Mourad, 13705 La Ciotat (FR)

(57) **Abstract**

The invention is a method for authenticating a user. A secure element is allocated to the user. The method comprises the following steps of
- generating a reference from a first data representative of the user and a second data representative of the secure element,
- using the reference for retrieving an identifier corresponding to the reference in a remote repository,
- using the identifier for retrieving credentials corresponding to the identifier in a remote machine, and
- authenticating the user thanks to said credentials.

## Description

### (Technical field)

The present invention relates to the methods of authenticating a user. It relates particularly to methods of authenticating credentials or rights attached to a person.

### (Background)

A person may have several credentials or rights which are attached to an Identity card, a Health card, a social security token, a driving license or any other kind of physical tokens.

When a person loses his physical token, the associated credentials are no more available. Moreover this loss may entail a huge worrying and several inconveniences to the person like intricate administrative procedures to re-issue the lost credentials, wasted time or even the need to bring initial proves of identity in case all credentials are lost or stolen.

There is a need for providing physical tokens which allow to authenticate credentials of a person and which can easily be re-issued.

### (Summary of the Invention)

An object of the invention is to solve the above mentioned technical problem.

The object of the present invention is a method for authenticating a user. An electronic secure element is allocated to the user. The method comprises the following steps:
- generating a reference from a first data representative of the user and a second data representative of the electronic secure element,
- using the reference for retrieving an identifier corresponding to the reference in a remote repository,
- using the identifier for retrieving credentials corresponding to the identifier in a remote machine,
- authenticating the user thanks to said credentials.

Advantageously, the reference may be generated from a third data representative of a type of credentials.

Advantageously, the electronic secure element may comprise a computing means adapted to run a physical unclonable function which requires an input parameter and which is able to generate a response representative of the electronic secure element. The method may comprise the further steps:
- giving the secure element a value, representative of the user,
- building first data from the value and executing the physical unclonable function for generating the response by using said first data as input parameter,
- using said response as second data and sending the reference to an authentication device,
- sending a first request comprising the reference from the authentication device to the remote repository,
- sending a second request comprising the identifier from the remote repository to the remote machine,
- sending the credentials to the authentication device.

Advantageously, the value may be checked in the secure element and the building of said first data may be triggered only in case of successful checking.

Advantageously, the value may comprise at least one element selected from the group consisting in biometric data, password, PIN code and secret key and the authenticating step may allow to identify the user or to grant the user access to a service.

Advantageously, the value may be supplied by a portable device only when the user has agreed.

Advantageously, the value may be supplied to the authentication device by the user and the authentication device may provide the value to the secure element.

Advantageously, the sending of said first request may be triggered by a step of authorization based on a secret data.

Advantageously, the step of authorization may be performed by an authority representing a State.

Another object of the invention is a system comprising an electronic secure element allocated to a user, an authentication device, a remote repository and a remote machine. The electronic secure element comprises a generating means adapted to generate a reference from a first data representative of the user and from a second data representative of the secure element. The remote repository comprises a plurality of identifiers and a searching means adapted to search for the identifier corresponding to the reference in the plurality of identifiers. The remote repository comprises a requesting means adapted to request credentials to the remote machine. The remote machine comprises a plurality of credentials and a seeking means adapted to search for the credentials corresponding to the identifier in the plurality of credentials. The authentication device comprises an authenticating means adapted to authenticate the user thanks to said credentials.

Advantageously, the authentication device may comprise a checking means adapted to run an authorization operation based on a secret data and to authorize the sending of a request comprising the reference to the remote repository in case of successful checking.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of a system comprising a secure element, a remote repository, a remote machine, an authentication device and a portable device according to the invention;
- Figure 2 is an example of a step sequence for authenticating a user according to one embodiment of the invention; and
- Figure 3 is another example of a step sequence for authenticating a user according to one embodiment of the invention.

### (Detailed description of the preferred embodiments)

The invention may apply to any types of electronic secure elements comprising a physical component which may be unambiguously identified. Preferably, this physical component is identified thanks to a Physical Unclonable Function.

A Physical Unclonable Function (PUF) is a function that is embodied in a physical structure and is easy to evaluate but extremely difficult to predict. An individual PUF component must be easy to make but practically impossible to duplicate, even given the exact manufacturing process that produced it. When a physical stimulus is applied to the structure, it reacts in an unpredictable way due to the complex interaction of the stimulus with the physical microstructure of the component. This exact microstructure depends on physical factors introduced during manufacture which are unpredictable. The applied stimulus is called the challenge, and the reaction of the PUF is called the response. A specific challenge and its corresponding response together form a challenge-response pair which is specific to a given component. Such a challenge-response pair is assumed to be steady. The identity of the component is established by the properties of the microstructure itself.

In the following examples, the secure element is a smart card but it could be any other kind of secure device. In particular, the secure element may be a mass storage USE token, a SD ® or micro SD ® (Secure Digital) card or a secure element connected to a host machine like a personal computer, a tablet, or a mobile phone.

The present invention relies on the combination of one identifier representative of a person and one identifier representative of a secure element associated to the person for building a reference allowing retrieving rights or credentials associated to the person in a remote system made of several distinct machines.

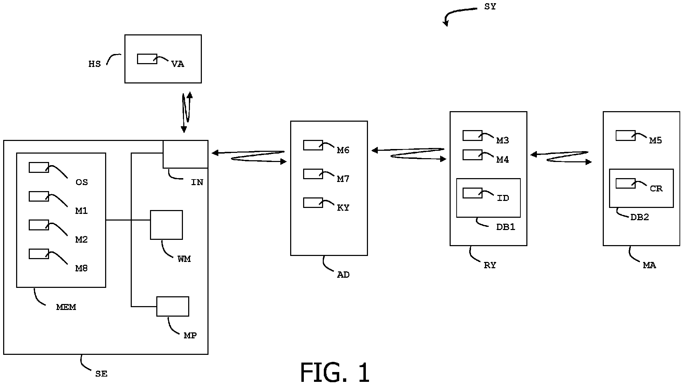

**Figure 1** shows a system SY comprising a secure element SE, a remote repository RY, a remote machine MA, an authentication device AD and a portable device HS according to a first example of the invention.

The portable device HS is a mobile phone comprising value VA representative of the user US. The portable device HS is able to send the value VA to the secure element SE (or to the authentication device AD) through a secure communication channel. The value VA may be sent through a NFC (Near Field Communication) channel for example. The portable device HS is able to send the value VA to the secure element SE through a secure communication channel.

The secure element SE is associated to the user US.

The secure element SE is a contactless smart card and comprises a non volatile memory MEM, a microprocessor MP, a communication interface IN and a working memory WM. The non volatile memory MEM comprises an operating system OS which may contain a Virtual Machine.

The communication interface IN comprises an antenna allowing the secure element SE to communicate through a contactless protocol. The working memory is a SRAM (Static Random-Access memory).

The secure element SE is able to exchange data with the authentication device AD thanks to the communication interface IN. The secure element SE may be able to exchange data with the remote repository RY through an intermediate network which is not drawn. The secure element SE may also exchange data with the remote repository RY via the authentication device AD.

The non volatile memory MEM comprises three means M1, M2 and M8.

The secure element SE comprises a means M8 which is able to receive a value VA representative of the user US, to check the authenticity of the value VA and to build a data M from the value VA so that the data M is representative of the user US.

Alternatively, the means M8 is able to get the value VA, to build the data M from the value VA and to check the authenticity of the data M. In this case, means M8 may be a biosensor, the data M may be minutiae representative of the user and the data M may be compared to a biometric template stored in the secure element.

Alternatively, the secure element SE does not comprise the means M8 and is adapted to receive the data M representative of a user thanks to the communication interface IN.

The means M1 (also called computing means) is adapted to run a physical unclonable function (called PUF1) able to generate a response R which is representative of the working memory WM. The function PUF1 requires a challenge as input parameter.

The means M2 (also called generating means) is adapted to generate a reference PA from the data M representative of a user and from the generated response R. For example the reference PA may be generated as the concatenation of the data M and the response R. If the response R is computed by using the data M as challenge of the function PUF1, the reference PA may be computed from the response R only. According to the invention, the value of the reference PA must be computed from both a data representative of the user and a data representative of the secure element allocated to the user.

The memory MEM may be implemented as any combinations of one, two or more memories. These memories may be any kind of non volatile memory like NAND flash or EEPROM memory.

The authentication device AD is a device comprising a secret data KY and two means M6 and M7. The authentication device AD is intended to receive the reference PA from the secure element SE. In a preferred embodiment, the authentication device AD is a portable device.

The means M6 (also called authenticating means) is adapted to authenticate the user thanks to credentials received from the remote repository RY.

The means M7 (also called checking means) is adapted to run an authorization operation by using the secret data KY and to authorize the sending of a request to the remote repository in case of successful checking only. For instance, the authentication device AD has a keypad and the means M7 checks that a PIN code provided through the keypad is equal to the secret data KY. In case of successful comparison, the means M7 authorize the sending of a request comprising the reference PA.

The remote repository RY is a computer machine comprising a set DB1 of user identifiers and two means M3 and M4. The set DB1 of user identifiers may be a database comprising a plurality of identifiers. Each identifier corresponds to a distinct user. The set DB1 comprises an identifier ID corresponding to the user US. The set DB1 does not contain any credentials.

The means M3 (also called searching means) is adapted to search for an identifier corresponding to a received reference in the set DB1.

The means M4 (also called requesting means) is adapted to request credentials corresponding to an identifier in the remote machine MA.

The remote machine MA is a computer machine distinct from the remote repository RY. The remote machine MA comprises a set DB2 of credentials and a means M5. The set DB2 may be a database comprising a plurality of credentials or rights. Each credentials corresponds to a distinct user identifier. The set DB2 comprises a credentials CR corresponding to the user US.

The means M5 (also called seeking means) is adapted to search for the credentials corresponding to a received identifier in the set DB2.

The remote machine MA may be reachable through the so-called cloud or Internet.

As it will be understood, some elements of the above-presented system SY are optional.

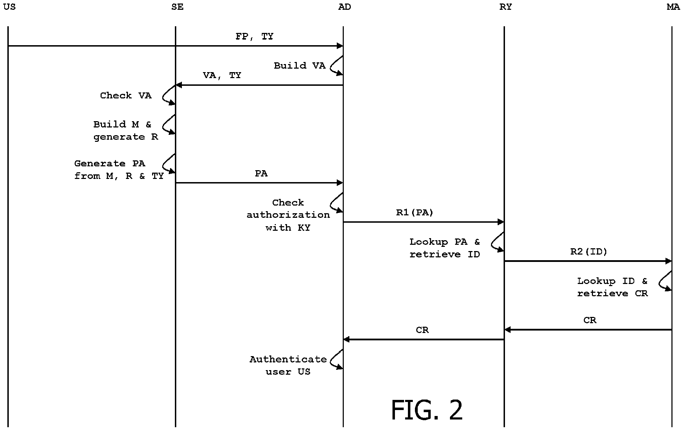

**Figure 2** shows a sequence of steps for authenticating a user US according to one example of the invention.

The context may be an identity control where a user is requested to show his identification papers. The control is carried out by a police officer having an authentication device AD. In this case the authentication device AD is a handheld terminal.

At a first step, the user US delivers his fingerprints FP to a biosensor connected to the authentication device AD.

Alternatively, the user US may enter a password, a PIN code or any secret value associated to the user US.

Then the user US brings his secure element SE near the authentication device AD for establishing a communication session between the secure element and the device AD (or inserts the element SE in the device AD in case of a contact communication interface). The secure element is powered and the PUF1 function may be run on the SRAM component. The PUF1 function applied to the SRAM component is assumed to provide a result representative of the secure element SE itself since the working memory is embedded in the secure element SE. The PUF1 function generates a result R.

The PUF of a SRAM (Static Random-Access memory) body may be computed according to the default state of the memory when the SRAM component is started. Such a PUF is based on the uncertainty of the value of each bit of a SRAM memory when the SRAM component is powered. It has been shown that a number of memory points, among all the memory, have the same value for each start of a same component while being different from one component to another within the same family. Additionally, a PUF memory-based may exploit this feature within the values of some or all memory points of the SRAM component and select a set of memory points depending on a challenge.

Minutiae VA are extracted from the fingerprints FP and sent from the authentication device AD to the secure element SE.

Advantageously, the secure element SE may check the validity of the minutiae VA by running a comparison with a reference stored into the secure element. This checking operation is called a match-on-card verification and is well known in biometric domain.

If the verification is successful, a data M is generated from the minutiae VA. Many mathematical functions may be used for generating the data M from the minutiae VA while large entropy is kept. The generated data M must remain representative of the user US. The data M may be computer as the result of the encryption of the minutiae VA by a preset pattern with any relevant algorithm, like DES (Data Encryption Standard) for instance.

The data M may be used as input parameter (e.g. challenge) for running the PUF1 function on the working memory. In this case, the response R generated by the PUF1 function depends on both the user US and the secure element SE.

At a further step, a reference PA is generated from both data M and the response R into the secure element. Then the reference PA is sent to the authentication device AD.

At a further step, a request R1 is sent from the authentication device AD to the remote repository RY. The request R1 comprises the reference PA. The sending of the request R1 may depends on the checking of a specific authorization provided by the police officer. For instance, the police officer may enter a password and a comparison is performed with a secret data KY stored into the authentication device AD.

In order to increase the security level, the communication between the authentication device AD and the remote repository RY may use integrity and confidentiality features.

At a further step, the reference PA is used for searching the corresponding identifier ID in the set DB1. In case of successful matching, a request R2 is sent from the remote repository RY to the remote machine MA. The request R2 comprises the identifier ID. It is important to note that the request R2 does not contain the reference PA. This allows splitting responsibilities between the repository RY and the remote machine MA.

Then the identifier ID is used for searching the corresponding credentials CR in the set DB2. In case of successful matching, the found credentials CR is sent to the remote repository RY. The remote repository RY forwards the found credentials CR to the authentication device AD.

Then the credentials CR is displayed on a screen of the device AD and the police officer may complete the identity control. The credentials CR may also be checked by running an authentication computation into the authentication device AD.

Alternatively, the user may supply a data TY representative of a type of credentials. For example, the data TY is provided to the authentication device AD which forwards this data to the secure element SE. Thus the reference PA may be generated from the combination of the data M, the response R and the data TY. This additional data allows selecting the credentials of a targeted type. This may be useful when several kinds of credentials are registered for a given user. Instead of directly selecting a type of credentials, the user may select an application and the device HS (or device AD) may find the type of credentials corresponding to the selected application.

Alternatively, the user US may deliver his fingerprints FP or his minutiae VA to a biosensor embedded in the secure element SE.

Alternatively, the authentication device AD may be not involved in the supplying of the reference PA to the remote repository RY. In this case, the secure element SE is able to get the VA value from the user and to establish a communication channel with the remote repository RY for sending the request R1. The found credentials are sent to authentication device AD for the final authentication checking only.

The authentication device AD may also be a remote computer (i.e. located far from the user).

The above-described examples focus on the context of identity control. The invention also applies to many types of rights or credentials authentication. For instance, the invention allows checking that a user is entitled to access a service, an area, or a product.

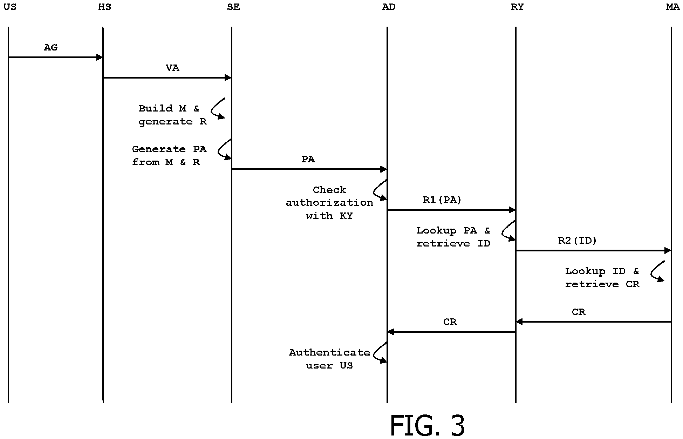

**Figure 3** shows a sequence of steps for authenticating a user US according to another example of the invention.

At a first step, the user US gives his consent AG to the portable device HS. The user US agrees that the portable device HS sends the value VA (representative of the user US) to the secure element SE.

The users US may give his consent by entering a secret value or by making a specific gesture.

Alternatively, the user US may agree that the portable device HS sends the value VA to the authentication device AD. In this case the authentication device AD forwards the value VA to the secure element SE. The secure element SE may build the data M from the value VA, generate the response R and generate the reference PA from both data M and R.

Then the following steps are similar to those of the figure 2.

It is clear from the description, that several steps are optional. Moreover, some treatments may be distributed across different machines. For example, the PUF function may be run into the authentication device AD (or in the portable device HS) after reading PUF data on the body of the secure element. In this case, the PUF does not target the SRAM. The PUF may target another physical component of the secure element.

Of course, if the identifier search fails in the remote repository RY or if the credentials search fails in the remote machine MA then the user authentication fails. In other words, the authentication of the user credentials fails. In this case a failure message is sent to the authentication device AD.

Depending on the kind of credentials, the authentication device AD may be managed by an authority representing a State, a Government, a company, or any service providers.

It is to be noted that the personal data (e.g. biometric data or password) coming from the user is not sent outside of the secure element. There is no risk to have this personal data exposed to potential spying through the communication with remote computers.

The user authentication relies on the combination of a data provided by the user himself and another data provided by the secure element. The secure element does not necessary contain data specific to the user. In particular, the secure element may not check the value VA or the secure element may check the value VA by using a reference retrieved from another remote computer.

The re-issuing of a secure element allocated to the user may be done without writing personalized data (e.g. specific to the associated user) in the secure element. All existing credentials associate to the user may be kept unchanged in the remote machine MA. Only the identifier stored in the remote repository RY has to be updated.

If the secure element is stolen, there is no risk to have an identity theft or an unauthorized access to a service.

## Claims

1. A method for authenticating a user (US), an electronic secure element (SE) being allocated to the user (US),
**characterized in that** said method comprises the following steps:
- generating a reference (PA) from a first data (M) representative of the user (US) and a second data (R) representative of the secure element (SE),
- using the reference (PA) for retrieving an identifier (ID) corresponding to the reference (PA) in a remote repository (RY),
- using the identifier (ID) for retrieving credentials (CR) corresponding to the identifier (ID) in a remote machine (MA),
- authenticating the user (US) thanks to said credentials (CR).

2. A method according to claim 1, wherein the reference (PA) is generated from a third data (TY) representative of a type of credentials.

3. A method according to claim 1 or 2, wherein the secure element (SE) comprises a computing means (M1) adapted to run a physical unclonable function which requires an input parameter and which is able to generate a response representative of said secure element (SE) and wherein the method comprises the further steps:
- giving the secure element (SE) a value (VA), representative of the user (US),
- building first data (M) from the value (VA) and executing the physical unclonable function for generating the response by using said first data (M) as input parameter,
- using said response as second data (R) and sending the reference (PA) to an authentication device (AD),
- sending a first request (R1) comprising the reference (PA) from the authentication device (AD) to the remote repository (RY),
- sending a second request (R2) comprising the identifier (ID) from the remote repository (RY) to the remote machine (MA),
- sending the credentials (CR) to the authentication device (AD).

4. A method according to claim 3, wherein the value (VA) is checked in the secure element (SE) and wherein the building of said first data (M) is triggered only in case of successful checking.

5. A method according to claim 3, wherein the value (VA) comprises at least one element selected from the group consisting in biometric data, password, PIN code and secret key and wherein the authenticating step allows to identify the user (US) or to grant the user (US) access to a service.

6. A method according to claim 3, wherein the value (VA) is supplied by a portable device (HS) only when the user (US) has agreed.

7. A method according to claim 3, wherein the value (VA) is supplied to the authentication device (AD) by the user (US) and wherein the authentication device (AD) provides the value (VA) to the secure element (SE).

8. A method according to claim 3, wherein the sending of said first request (R1) is triggered by a step of authorization based on a secret data (KY).

9. A method according to claim 8, wherein the step of authorization is performed by an authority representing a State.

10. A **system** (SY) comprising an electronic secure element (SE) allocated to a user (US), an authentication device (AD), a remote repository (RY) and a remote machine (MA),
**characterized in that** said electronic secure element (SE) comprises a generating means (M2) adapted to generate a reference (PA) from a first data (M) representative of the user (US) and a second data (R) representative of the secure element (SE),
**in that** said remote repository (RY) comprises a plurality of identifiers (DB1) and a searching means (M3) adapted to search for the identifier (ID) corresponding to the reference (PA) in the plurality of identifiers (DB1), **in that** said remote repository (RY) comprises a requesting means (M4) adapted to request credentials to the remote machine (MA),
**in that** said remote machine (MA) comprises a plurality of credentials (DB2) and a seeking means (M5) adapted to search for the credentials (CR) corresponding to the identifier (ID) in the plurality of credentials (DB2),
and **in that** said authentication device (AD) comprises an authenticating means (M6) adapted to authenticate the user (US) thanks to said credentials (CR).

11. A system (SY) according to claim 10, wherein said authentication device (AD) comprises a checking means (M7) adapted to run an authorization operation based on a secret data (KY) and to authorize the sending of a request comprising the reference (PA) to the remote repository (RY) in case of successful checking.
